(19) Europäisches Patentamt
European Patent Office
Office européen des brevets

(11) Veröffentlichungsnummer: **0 243 318 B1**

(12) **EUROPÄISCHE PATENTSCHRIFT**

(45) Veröffentlichungstag der Patentschrift: **20.03.91**

(51) Int. Cl.5: **C08G 59/02**, C08G 8/36, C08G 59/24, C08G 59/32, C08G 59/34, C07D 303/24, H01B 3/40

(21) Anmeldenummer: **87810247.4**

(22) Anmeldetag: **21.04.87**

# (54) Epoxidgruppenhaltige Phenolether.

(30) Priorität: **22.04.86 CH 1620/86**

(43) Veröffentlichungstag der Anmeldung: **28.10.87 Patentblatt 87/44**

(45) Bekanntmachung des Hinweises auf die Patenterteilung: **20.03.91 Patentblatt 91/12**

(84) Benannte Vertragsstaaten: **CH DE FR GB IT LI NL**

(56) Entgegenhaltungen:
**CH-A- 397 626**
**DE-A- 2 630 107**
**DE-C- 352 003**
**GB-A- 828 364**

(73) Patentinhaber: **CIBA-GEIGY AG**
**Klybeckstrasse 141**
**CH-4002 Basel(CH)**

(72) Erfinder: **Monnier, Charles Edward**
**Ch.du Verger 16**
**CH-1752 Villars-sur-Glâne(CH)**
Erfinder: **Roth, Martin, Dr.**
**Oberdorf**
**CH-1711 Giffers(CH)**

**EP 0 243 318 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Phenolether enthaltend Epoxidgruppen, härtbare Gemische enthaltend solche Epoxidverbindungen, die Herstellung dieser Verbindungen, sowie deren Verwendung zum Herstellen gehärteter Produkte, besonders zum Umhüllen elektronischer Bauteile.

Glycidylether auf Bisphenol-Basis oder epoxidierte Novolake sind bekannt. In der Regel stellt man solche Verbindungen durch Umsetzung der entsprechenden Phenole mit Halogenhydrinen, insbesondere mit Epichlorhydrin, her.

Herstellungsbedingt enthalten diese Produkte einen gewissen Anteil an ionischem Halogen oder an hydrolysierbarem, d.h. nicht aromatisch gebundenem, Halogen.

In letzter Zeit ist die Nachfrage nach Epoxidharzen mit möglichst geringem Gehalt an ionischem oder hydrolysierbarem Halogen gewachsen. Insbesondere bei der Umhüllung elektronischer Bauteile stören solche Verunreinigungen. Die Herstellung über Halogenhydrine führt zu grösseren Mengen dieser Verunreinigungen, die schwer aus dem Reaktionsprodukt zu entfernen sind. Es wäre deshalb wünschenswert, wenn bei der Herstellung dieser Epoxidharze des Weg über die Halogenhydrine umgangen werden könnte.

In der JP-OS 60-60,123 wird die Epoxidierung von Novolak-Allylethern in einem Zweiphasensystem beschrieben. Als Oxidationsmittel verwendet man Wasserstoffperoxid. Die Reaktion wird in Gegenwart eines Katalysatorsystems aus quaternärem Ammoniumsalz, einer Vanadium-, Wolfram- oder Molybdänverbindung und einer Phosphorverbindung durchgeführt.

Es wäre wünschenswert, die Kombination Wasserstoffperoxid/Katalysatorsystem durch die einfachere Epoxidierung mit Persäuren zu ersetzen. Diese Epoxidierung von Novolak-Allylethern mit Persäuren führt jedoch, wie eigene Untersuchungen zeigten, zu Prcdukten mit einem geringen Epoxidgehalt.

In der GB-PS 828,364 sind unter anderem Polyepoxide beschrieben, die durch Epoxidierung des Diglycidylethers von o,o'-diallylsubstituiertem Bisphenol A mit Persäuren hergestellt werden. Die Verbindungen besitzen, bedingt durch die Veretherungsstufe mit Epichlorhydrin als Reagenz, einen relativ hohen Gehalt an nicht hydrolysierbarem, hydrolysierbarem oder ionischem Chlor.

Gegenstand der Erfindung sind Verbindungen der Formel I

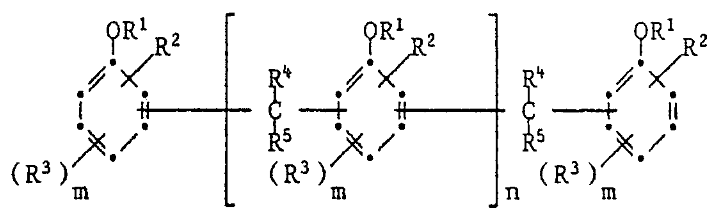

(I) ,

worin $R^1$ $C_1$-$C_{20}$Alkyl, $C_5$-$C_9$Cycloalkyl oder $C_7$-$C_{14}$Aralkyl ist, $R^2$ eine der Bedeutungen von $R^1$ besitzt oder zusätzlich Wasserstoff oder ein Rest der Formel II ist

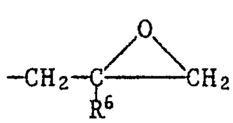

(II) ,

$R^3$ $C_1$-$C_6$Alkyl oder Halogen bedeutet, $R^4$ und $R^5$ unabhängig voneinander Wasserstoff oder $C_1$-$C_6$Alkyl sind, $R^6$ Wasserstoff oder Methyl ist, m 0, 1 oder 2 ist und n eine ganze Zahl von 0 bis 30 darstellt, mit der Massgabe, dass mindestens zwei Reste $R^2$ in der Verbindung I eine Epoxidgruppe der Formel II sein müssen.

$R^1$ als $C_1$-$C_{20}$Alkyl ist geradkettig oder verzweigt, bevorzugt jedoch geradkettig. Beispiele für solche Reste sind Methyl, Ethyl, n-Propyl, Isopropyl, n-Butyl, sek.Butyl, tert.Butyl, n-Pentyl, Hexyl, Heptyl, Octyl, 2-Ethylhexyl, Nonyl, Decyl, Dodecyl, Tetradecyl, Hexadecyl, Octadecyl oder Eicosyl.

Vorzugsweise handelt es sich bei $R^1$ um geradkettiges $C_1$-$C_6$Alkyl und ganz besonders um Methyl.

Als $C_5$-$C_9$Cycloalkyl ist $R^1$ beispielsweise Cyclopentyl, Cyclohexyl, Cycloheptyl, Cyclooctyl oder Cyclononyl, insbesondere jedoch Cyclohexyl.

Beispiele für $R^1$ als $C_7$-$C_{14}$Aralkyl sind Benzyl, $\alpha$-Methylbenzyl, $\alpha,\alpha$-Dimethylbenzyl, $\alpha$-Ethylbenzyl oder $\alpha,\alpha$-Diethylbenzyl. Bevorzugt wird Benzyl.

Handelt es sich bei irgendwelchen Substituenten um $C_1$-$C_6$Alkyl, so sind damit geradkettige oder

verzweigte Alkylreste gemeint, bevorzugt jedoch geradkettige Reste. Beispiele dafür sind Methyl, Ethyl, Propyl, Butyl, Pentyl oder Hexyl. Bevorzugt wird insbesondere Methyl.

$R^3$ als Halogen kann Fluor, Chlor, Brom oder Iod sein; bevorzugt ist es Chlor oder Brom und insbesondere Brom.

Der Index m bestimmt, ob neben der Ethergruppe und dem Substituenten $R^2$ noch weitere Kernsubstituenten anwesend sind. Vorzugsweise ist m 0. In diesem Falle befindet sich anstelle des Restes $R^3$ ein Wasserstoffatom am Phenylkern.

Unter den Rahmen der Erfindung fallen auch solche Novolake, bei denen nur ein Teil der Kerne, vorzugsweise mehr als 80 % der Kerne eines Moleküls, mindestens jedoch zwei davon, eine Epoxidgruppe tragen.

Ganz besonders bevorzugt werden Verbindungen der Formel I, wie oben definiert, worin sämtliche Reste $R^2$ eine Epoxidgruppe der Formel II bedeuten.

Ganz besonders bevorzugt als Epoxidgruppe der Formel II wird der Epoxipropylrest der Formel III

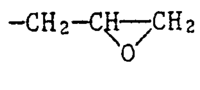 (III),

der sich durch Epoxidierung von Allylgruppen erhalten lässt.

Ebenfalls bevorzugt werden Verbindungen der Formel I, wie oben definiert, worin $R^1$ $C_1$-$C_6$Alkyl ist.

Ferner werden Verbindungen der Formel I bevorzugt, die sich von Bisphenolen ableiten. Bei diesen Verbindungen ist der Index n 0.

Ebenfalls bevorzugt werden Verbindungen der Formel I, die sich von Novolakethern ableiten, bevorzugt von solchen mit dem Index n von 1 bis 20, insbesondere 3 bis 20. Bei diesen Novolakderivaten handelt es sich in der Regel um Gemische von Verbindungen unterschiedlichen Kondensationsgrades und somit unterschiedlicher Kettenlänge.

Die Brücke -C($R^4R^5$)- ist vorzugsweise $-CH_2-$, $-CH(CH_3)-$ oder $-C(CH_3)_2-$; $R^4$ und $R^5$ sind also unabhängig voneinander bevorzugt Wasserstoff oder Methyl. Bei den Novolaken der Formel I, worin n grösser als 0 ist, befinden sich die Reste $R^2$ und -C($R^4R^5$)- in den nicht endständigen Phenylkernen bevorzugt in den beiden ortho-Positionen und der para-Position zur Phenolethergruppe -O$R^1$. Die Reste $R^3$, falls vorhanden, befinden sich in diesen Fällen also in der oder den meta-Position(en) zum Rest -O$R^1$.

Ganz besonders bevorzugt werden Verbindungen der Formel I, wie oben definiert, worin $R^2$ ein Rest der Formel II ist und sich in ortho-oder in para-Position zum Rest -O$R^1$ befindet.

Insbesondere werden Verbindungen der Formel I bevorzugt, worin $R^1$ $C_1$-$C_6$Alkyl oder Benzyl ist, $R^2$ eine Gruppe der Formel III bedeutet und sich in ortho-Position zur Gruppe -O$R^1$ befindet, $R^3$ $C_1$-$C_4$Alkyl, Chlor oder Brom ist, m 0, 1 oder 2 bedeutet und n eine ganze Zahl von 3 bis 20 darstellt.

Ebenfalls bevorzugt werden Verbindungen der Formel I, worin m 1 oder 2 ist und $R^3$ Chlor oder Brom bedeutet.

Die Verbindungen der Formel I können durch Epoxidierung von Phenolethern mit Alkenylsubstituenten hergestellt werden.

Die Epoxidierung wird in der Regel durch Umwandlung der olefinischen Gruppe mittels Persäuren erfolgen. Dieses Verfahren kann ohne halogenhaltige Reagenzien durchgeführt werden, wodurch sehr halogenarme Produkte entstehen. Ueberraschenderweise wird ein Produkt mit einem hohen Epoxidierungsgrad erhalten, während bei der Epoxidierung der entsprechenden nicht veretherten Bisphenole oder der nicht veretherten Novolake keine Epoxidbildung eintritt [vgl. dazu S.A. Harrison et al. in Journal of Organic Chemistry, 27 , 3311 (1962)]. In der DE-OS 2,630,107 wird die Epoxidierung von Ethern einkerniger o-Allylphenole beschrieben. Die Ausbeuten an epoxidiertem Produkt liegen bei etwa 50 % der Theorie. Die Epoxidierungsreaktion bei den entsprechenden mehrkernigen Allylverbindungen liefert überraschenderweise höhere Ausbeuten.

Die Erfindung betrifft daher auch ein Verfahren zur Herstellung von Verbindungen der Formel I, wie oben definiert, ausgehend von Verbindungen der Formel IV

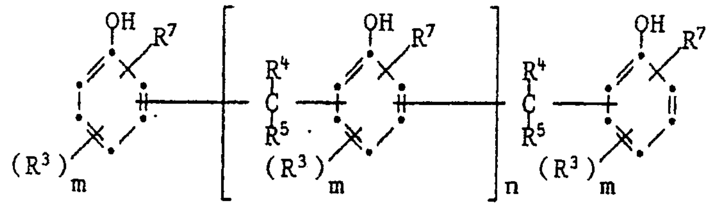 (IV),

worin die Reste $R^3$ bis $R^5$ und die Indizes m und n die oben definierte Bedeutung besitzen, $R^7$ eine der weiter oben für $R^1$ definierten Bedeutungen annimmt oder zusätzlich Wasserstoff oder ein Rest der Formel V ist

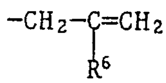 (V),

worin $R^6$ die oben definierte Bedeutung besitzt, wobei mindestens zwei Gruppen $R^7$ der Verbindungen IV eine Alkenylgruppe V sein müssen, umfassend die Schritte

a) Veretherung der phenolischen Hydroxylgruppen der Verbindung IV mit einem zur Einführung des Restes $R^1$ geeigneten Reagenz und

b) Epoxidierung der Alkenylgruppen V mit einem zur Einführung der 2,3-Epoxidgruppe geeigneten Reagenz.

Die Ausgangsmaterialien der Formel IV sind bekannt oder können nach an sich bekannten Verfahren erhalten werden. So lässt sich beispielsweise kommerziell erhältliches 2-(Meth)allylphenol in an sich bekannter Weise mit Aldehyden zu den entsprechenden Novolaken der Formel IV umsetzen. Ferner sind die Verbindungen der Formel IV durch Claisen Umlagerung aus Bisphenol- oder Novolak(meth)allylethern erhältlich.

Ganz besonders bevorzugt wird diejenige Verfahrensvariante, worin das Veretherungsreagenz kein Halogen als Abgangsgruppe besitzt; in einem solchen Verfahren wird beispielsweise ein Alkylsulfat als Veretherungsreagenz eingesetzt.

Als Veretherungsmethoden kommen sämtliche gängige Verfahrensweisen in Frage. So kann man das Polyphenol IV beispielsweise mit folgenden Reagenzien umsetzen: Alkylhalogeniden, insbesondere Methylchlorid, Methylbromid oder Methyliodid, Alkylsulfaten, insbesondere Dimethylsulfat oder Alkylsulfonaten, beispielsweise Methyl-p-toluolsulfonat.

Als Epoxidierungsreagenz der olefinischen Gruppe der Formel V nimmt man in der Regel Percarbonsäuren. Als Persäuren für die Epoxidierung der veretherten Verbindungen IV kommen vor allem organische Persäuren, wie z.B. Perameisensäure, Peressigsäure, Perbernsteinsäure, Perbenzoesäure, m-Chlorperbenzoesäure und Monoperphthalsäure, in Betracht. Die organischen Persäuren können als solche eingesetzt oder in situ gebildet werden, beispielsweise aus aliphatischen oder aromatischen Carbonsäuren, Carbonsäureanhydriden, Carbonsäureestern, Säurechloriden oder Keten und Wasserstoffperoxid. Zur in-situ-Bildung der Persäuren verwendet man vorzugsweise aliphatische oder aromatische Mono- oder Dicarbonsäuren oder deren Anhydride, wie Ameisensäure, Essigsäure, Propionsäure, Bernsteinsäureanhydrid, Benzoesäure, oder Phthalsäure, und Wasserstoffperoxid, gegebenenfalls unter Zusatz von sauren Katalysatoren, wie Schwefelsäure oder Alkalimetallsalzen. Die Epoxidierung der Addukte wird bevorzugt in Gegenwart von vorgebildeter oder in situ erzeugter Perameisensäure oder Peressigsäure durchgeführt. Gewünschtenfalls können auch anorganische Persäuren, wie Permolybdänsäure, Pervanadinsäure oder Perwolframsäure, eingesetzt werden. Das Epoxidierungsmittel (Persäure) wird zweckmässig in einer Menge von mindestens 1 Mol pro vorhandene (Meth)allylgruppe und vorzugsweise im Ueberschuss, z.B. einem 20-200%igen molaren Ueberschuss, verwendet.

Die Veretherung der Verbindungen IV und die Epoxidierung der Produkte wird mit Vorteil in Gegenwart inerter organischer Lösungsmittel und im Falle der Epoxidierung, gegebenenfalls unter Zusatz von Puffersubstanzen, wie Natriumacetat oder Natriumhydrogenphosphat, vorgenommen. Als Lösungsmittel eignen sich z.B. gegebenenfalls halogenierte aliphatische oder aromatische Kohlenwasserstoffe, wie Chloroform, Dichlormethan, Benzol, Toluol und Chlorbenzol, Ether, wie Diethylether, Diisopropylether, Dioxan und Tetrahydrofuran, sowie Carbonsäurealkylester, wie Essigsäureethylester und -n-butylester. Halogenierte, besonders chlorierte aliphatische Kohlenwasserstoffe sind als Lösungsmittel bevorzugt; besonders bevorzugt ist Chloroform. Die Reaktionstemperaturen liegen im allgemeinen zwischen -10 und +100° C, bevorzugt zwischen 10 und 60° C.

Die erfindungsgemäss erhältlichen Polyepoxide sind reine Substanzen, die im wesentlichen frei von Chlorid- und Alkalimetallionen sind. Sie eignen sich zur Herstellung von gehärteten Produkten, z.B. für die Umhüllung von integrierten Schaltungen, wofür Produkte von hoher Reinheit benötigt werden.

Weiterer Gegenstand der Erfindung sind daher Gemische enthaltend

a) ein Polyepoxid der Formel I und

b) einen Härter für die Komponente (a).

Dabei können auch Gemische verschiedener erfindungsgemäss erhältlicher Polyepoxide und/oder Härter verwendet werden. Als Härter (b) eignen sich an sich beliebige Epoxidharzhärter, wie z.B. Cyanamid, Dicyandiamid, Polycarbonsäuren, Polycarbonsäureanhydride, Polyamine, Polyaminoamide, Addukte aus Aminen und Polyepoxiden und Polyole.

Geeignete Polycarbonsäuren und ihre Anhydride sind z.B. Phthalsäureanhydrid oder Tetrahydro- und Hexahydrophthalsäureanhydrid, sowie die zu den oben genannten Anhydriden gehörenden Säuren.

Als Beispiele von Polyaminen, die sich als Härtungsmittel eignen, seien aliphatische, cycloaliphatische, aromatische und heterocyclische Polyamine, wie Hexamethylendiamin, Diethylentriamin, m-Xylylendiamin, Bis(4-amino-cyclohexyl)methan, m- und p-Phenylendiamin, Bis(4-aminophenyl)methan, Bis(4-aminophenyl)-sulfon und Anilin-Formaldehydharze genannt. Geeignete Polyaminoamide sind z.B. solche, die aus aliphatischen Polyaminen und dimerisierten oder trimerisierten ungesättigten Fettsäuren hergestellt sind.

Als Polyolhärter (b) kommen vor allem ein- oder mehrkernige aromatische Polyole, einschliesslich Novolake, in Betracht, wie Resorcin, Hydrochinon, 2,6-Dihydroxytoluol, Pyrogallol, 1,1,3-Tris-(hydroxyphenyl)propan, Bis(4-hydroxyphenyl)methan, 2,2-Bis(4-hydroxyphenyl)propan, Bis(4-hydroxyphenyl)sulfon and 4,4'-Dihydroxybiphenyl sowie Novolake aus Formaldehyd oder Acetaldehyd und Phenol, Chlorphenol oder Alkylphenolen mit bis zu 9 C-Atomen im Alkyl, besonders Kresol- und Phenolnovolake.

Bevorzugte Härter sind Polycarbonsäureanhydride, wie Tetrahydro-, Hexahydrophthalsäureanhydrid, sowie aromatische Polyamine, besonders Bis(4-aminophenyl)methan, Bis(4-aminophenyl)sulfon und m- oder p-Phenylendiamin, sowie ganz besonders Polyolhärter auf Novolakbasis, insbesondere Kresolnovolake oder Phenolnovolake.

Die erfindungsgemässen Gemische können auch weitere übliche Zusätze enthalten, vor allem (c) einen Beschleuniger und/oder (d) weitere Epoxidharze.

Als Beschleuniger (c) können ebenfalls an sich bekannte Verbindungen verwendet werden. Als Beispiele seien genannt: Komplexe von Aminen, besonders tertiären Aminen, wie Monoethylamin mit Bortrifluorid oder Bortrichlorid, tertiäre Amine, wie Benzyldimethylamin; Harnstoffderivate, wie N-4-Chlorphenyl-N',N'-dimethylharnstoff (Monuron); gegebenenfalls substituierte Imidazole, wie Imidazol oder 2-Phenylimidazol. Tertiäre Amine, besonders Benzyldimethylamin, und Imidazole, besonders 2-Phenylimidazol oder 2-Ethyl-4-methylimidazol, sind als Beschleuniger (c) bevorzugt.

Als weitere Epoxidharze (d) kommen vor allem solche mit durchschnittlich mehr als einer an ein Heteroatom, z.B. an ein S- und vorzugsweise an ein O- oder N-Atom, gebundenen Gruppen der Formel II, wie sie im Vorangehenden beschrieben sind, in Betracht.

Besonders bevorzugt setzt man als Komponente (d) gegebenenfalls vorverlängerte Diglycidylether von zweiwertigen Phenolen oder Cyclohexanolen, vor allem 2,2-Bis(4-hydroxyphenyl)propan, 2,2-Bis(dibrom-4-hydroxyphenyl)-propan, Bis(4-hydroxyphenyl)methan, Bis(4-hydroxycyclohexyl)methan oder 2,2-Bis(4-hydroxycyclohexyl)-propan, Polyglycidylether von Novolaken, oder tetraglycidyliertes 4,4'-Diaminodiphenylmethan ein. Ganz besonders bevorzugt sind gegebenenfalls vorverlängerte Diglycidylether von Bisphenol A, Tetrabrom-bisphenol A oder Bisphenol F, Polyglycidylether von Phenol-Formaldehyd- oder Kresol-Formaldehyd-Novolaken, oder Gemische davon.

Die Komponenten (b) und (c) werden in den üblichen wirksamen, d.h. für die Härtung der erfindungsgemässen Gemische ausreichenden Mengen eingesetzt. Das Verhältnis der Komponenten (a), (b), (c) und gegebenenfalls (d) hängt von der Art der verwendeten Verbindungen, der erforderlichen Härtungsgeschwindigkeit und den im Endprodukt gewünschten Eigenschaften ab und kann vom Fachmann auf dem Gebiet der Epoxidharz-Härtung leicht ermittelt werden. Wenn das Härtungsmittel (b) ein Amin ist, werden normalerweise 0,75 bis 1,25 Aequivalente Aminwasserstoff pro 1 Epoxidäquivalent eingesetzt. Bei Polycarbonsäure- oder Polycarbonsäureanhydrid-Härtern verwendet man gewöhnlich 0,4 bis 1,1 Aequivalente Carboxyl- bzw. Anhydridgruppen pro 1 Epoxidäquivalent. Bei der Verwendung von Polyphenolen als Härtungsmittel setzt man zweckmässig 0,75 bis 1,25 phenolische Hydroxylgruppen pro 1 Epoxidäquivalent ein. Beschleuniger (c) werden im allgemeinen in Mengen von 0,1 bis 5 Gewichtsprozent, bezogen auf die Epoxidharze (a) und gegebenenfalls (d), verwendet.

Gewünschtenfalls kann man den härtbaren Gemischen zur Herabsetzung der Viskosität reaktive Verdünner, wie z.B. Styroloxid, Butylglycidylether, 2,2,4-Trimethylpentylglycidylether, Phenylglycidylether,

Kresylglycidylether oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Betonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische finden z.B. Anwendung als Klebstoffe oder zur Herstellung von gehärteten Produkten, wie Verbundwerkstoffen und Laminaten, insbesondere jedoch zum Umhüllen elektronischer Bauteile. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze Matrixharze und Klebemittel verwendet werden.

Die Härtung der erfinderungsgemässen Gemische kann auf an sich bekannte Weise ein- oder zweistufig vorgenommen werden. Die Härtung der erfindungsgemässen Gemische erfolgt im allgemeinen durch Erhitzen auf Temperaturen zwischen 80 und 200 °C, besonders 100 und 180 °C.

Die mit den erfindungsgemäss erhältlichen Polyepoxiden hergestellten gehärteten Produkte zeichnen sich durch gute mechanische, thermische und chemische Eigenschaften aus.

Die Erfindung wird durch die folgenden Beispiele näher erläutert.

Beispiel 1: Herstellung eines 2-Glycidyl-Novolak-Methylethers

1a) Herstellung des 2-Allylphenol-Novolaks

In einem Reaktionsgefäss, versehen mit Rührer, Rückflusskühler und Stickstoffeinleitung erhitzt man die Mischung aus 1369,2 g (10 Mol) 2-Allylphenol (Reinheit 98 %), 771,4 g (9 Mol) Formaldehyd 35%ige Lösung und 23,4 g (0,26 Mol) Oxalsäure wasserfrei während 15 Stunden am Rückfluss. Man gibt weitere 42,9 g (0,5 Mol) Formaldehydlösung und 9,0 g (0,1 Mol) Oxalsäure zu und erhitzt nochmals 15 Stunden am Rückfluss. Das noch heisse Reaktionsprodukt wird 2 mal mit je 2000 ml heissem Wasser ausgewaschen und das verbleibende Harz (im warmen Zustand flüssig) durch Vakuumdestillation von flüchtigen Anteilen gereinigt; am Wasserstrahlvakuum destilliert zuerst Wasser ab, dann wird im Oelpumpenvakuum die Badtemperatur auf ca. 170 °C erhöht, wobei ein gelbliches Destillat (hauptsächlich Allylphenol) übergeht. Der Rückstand ist das bei Raumtemperatur sehr hochviskose, gelbliche Allylphenol-Novolakharz.
Ausbeute = 1310 g.
GPC-Analyse (Eichung mit Polystyrol-Standards): $\overline{M}_n$ = 991,
$\overline{M}_w$ = 1468.

1b) Herstellung des 2-Allylphenol-Novolak-Methylethers

In einem 6 l Sulfierkolben mit Rührer, Kühler und Thermometer werden 584,0 g (4,0 Mol) 2-Allylphenolnovolak in 2,05 l Toluol gelöst und auf 40 °C erwärmt. Anschliessend werden 1600 g (20 Mol) 50%ige Natronlauge zugegeben sowie 270,75 g (10 Mol-%) Tetrabutylammoniumhydrogensulfat. Innerhalb von 2 Stunden werden 1363,16 g (9,6 Mol) Methyliodid bei 60 °C zugetropft. Das Reaktionsgemisch wird noch während 16 Stunden ausreagieren gelassen, abgekühlt und mit 5 l Wasser und 10%iger Natriumhydrogensulfatlösung gewaschen, getrocknet und am Vakuum eingeengt.
Es resultieren 633,50 g (98,85 % dTh) 2-Allylnovolakmethylether der Viskosität 8100 mPas (40 °C) und <110 ppm totales Chlor.

1c) Epoxidierung von 2-Allylphenolnovolakmethylether

1,56 Mol (250 g) 2-Allylphenolnovolakmethylether werden in einem 1,5 l Sulfierkolben mit Rührer, Thermometer und Kühler vorgelegt und in 750 ml Toluol gelöst. Zur Lösung werden 26,5 g Natriumacetat zugegeben und anschliessend werden innerhalb 3 Stunden 295 g (1,87 Mol) 40%ige Peressigsäure

zugetropft. Die Reaktionstemperatur wird bei 40-45° C gehalten. Das Reaktionsgemisch wird noch während 6 Stunden ausreagieren gelassen, anschliessend wird das Reaktionsgemisch mit 250 ml Toluol verdünnt, die wässrige Phase abgetrennt und die organische Phase nacheinander mit 5 x 250 ml 10%iger $NaHCO_3$ Lösung extrahiert, bis das Reaktionsgemisch neutral und peroxidfrei gewaschen ist. Die Lösung wird über $Na_2SO_4$ getrocknet, filtriert und eingeengt.
Es resultieren 213,4 g (78 % dTh) eines viskosen Harzes (700 mPas/120° C) vom Epoxidgehalt 4,02 Aeq/kg und <118 ppm totales Chlor.

Beispiel 2: Epoxidierung von 2-Allylphenolnovolakmethylether

215,9 g (0,70 Mol) eines analog Beispiel 1a) und 1b) hergestellten 2-Allylphenolnovolakmethylethers ($\overline{M}_n$ = 321; $\overline{M}_w$ = 340; GPC-analytisch bestimmt) werden in einem Sulfierkolben mit Rührer, Thermometer und Kühler vorgelegt und in 630 ml Chloroform gelöst. Zur Lösung werden 11,7 g Natriumacetat gegeben und anschliessend werden innerhalb von 4 Stunden 309,0 g (1,63 Mol) 40%iger Peressigsäure zugetropft. Die Reaktionstemperatur wird bei etwa 35° C gehalten. Das Reaktionsgemisch wird noch während 4 Stunden ausreagieren gelassen, anschliessend wird es in 1 l Chloroform aufgenommen, die wässrige Phase abgetrennt, die organische Phase mit 2%iger Natronlauge neutral gewaschen, über $Na_2SO_4$ und $Na_2SO_3$ getrocknet bzw. peroxidfrei gemacht, filtriert und eingeengt.
Es resultieren 220,7 g (92,5 % dTh) eines viskosen Harzes mit dem Epoxidgehalt 4,43 Aequ./kg.

Beispiel 3: Epoxidierung von 2-Allylphenolnovolakmethylether

In Analogie zu Beispiel 2 setzt man 48,1 g (0,3 Mol) eines 2-Allylphenolnovolakmethylethers ($\overline{M}_n$ = 309; $\overline{M}_w$ = 325; GPC-analytisch bestimmt) mit 68,3 g (0,36 Mol) 40%iger Peressigsäure und 5,0 g Natriumacetat in 150 ml Chloroform um.
Man erhält ein epoxidiertes Produkt mit einem Epoxidgehalt von 4,22 Aequ./kg.
GPC-Analyse (Eichung mit Polystyrol-Standard): $\overline{M}_n$ = 311;
$\overline{M}_w$ = 333.
Gesamtchlorgehalt: weniger als 100 ppm.

Beispiel 4: Epoxidierung eines 2-Allylphenolnovolakmethylethers

In Analogie zu Beispiel 2 setzt man 48,1 g (0,3 Mol) eines 2-Allylphenolnovolakmethylethers ($\overline{M}_n$ = 449; $\overline{M}_w$ = 548; GPC-analytisch bestimmt) mit 68,3 g (0,36 Mol) 40%iger Peressigsäure und 5,0 g Natriumacetat in 150 ml Chloroform um.
Man erhält 46,61 g (88,17 dTh) eines epoxidierten Produktes mit einem Epoxidgehalt von 4,45 Aequ./kg und einer Viskosität von 550 mPas bei 80° C (gemessen im Epprecht Viskosimeter).
GPC-Analyse (Eichung mit Polystyrol-Standard): $\overline{M}_n$ = 453;
$\overline{M}_w$ = 578.
Gesamtchlorgehalt: weniger als 100 ppm.

Beispiel 5: Epoxidierung eines 2-Allylphenolnovolakmethylethers

In Analogie zu Beispiel 2 setzt man 48,1 g (0,3 Mol) eines 2-Allylphenolnovolakmethylethers ($\overline{M}_n$ = 543; $\overline{M}_w$ = 825; GPC-analytisch bestimmt) mit 68,3 g (0,36 Mol) 40%iger Peressigsäure und 5,0 g Natriumacetat in 150 ml Chloroform um.
Man erhält 52,0 g (98,3 % dTh) eines epoxidierten Produktes mit einem Epoxidgehalt von 4,25 Aequ./kg und einer Viskosität von 3270 mPas bei 80° C (gemessen im Epprecht Viskosimeter).
GPC-Analyse (Eichung mit Polystyrol-Standard): $\overline{M}_n$ = 543;
$\overline{M}_w$ = 877.

Beispiel 6: Epoxidierung eines 2-Allylphenolnovolakmethylethers

In Analogie zu Beispiel 2 setzt man 48,1 g (0,3 Mol) eines 2-Allylphenolnovolakmethylethers ($\overline{M}_n$ = 742 ; $\overline{M}_w$ = 1397; GPC-analytisch bestimmt) mit 68,3 g (0,36 Mol) 40%iger Peressigsäure und 5,0 g Natriumacetat in 150 ml Chloroform um.
Man erhält ein epoxidiertes Produkt mit einem Epoxidgehalt von 4,21 Aequ./kg.
GPC-Analyse (Eichung mit Polystyrol-Standard): $\overline{M}_n$ = 711;
$\overline{M}_w$ = 1429.
Gesamtchlorgehalt: weniger als 100 ppm.

Beispiel 7 : Herstellung von 2,2'-Bis-(3-[2,3-epoxypropyl]-4-methoxyphenyl)-propan

336,5 g (1,0 mol) 2,2'-Bis(3-allyl-4-methoxyphenyl)-propan werden in 1 000 ml Chloroform gelöst. Dann gibt man unter Rühren 49,4 g (0,6 mol) Natriumacetat zu. Nun werden bei 20-40° C innert 3 Stunden 418,1 g (2,2 mol) 40%ige Peressigsäure zugetropft. Anschliessend lässt man 9 Stunden nachreagieren, verdünnt dann mit 1000 ml Chloroform und trennt die Phasen. Die organische Phase wird zweimal mit je 500 ml deionisiertem Wasser ausgewaschen und mit 2 x 500 ml 10%iger wässriger $NaHCO_3$ Lösung neutral gestellt. Danach wird die organische Phase über $Na_2SO_4$ und $Na_2SO_3$ getrocknet und peroxidfrei gemacht (Kontrolle mit Iodstärkepapier). Nach Filtration wird das Lösungsmittel am Rotationsverdampfer bei 39,9 mPa und 70° C abgezogen und anschliessend wird das Produkt bei 0,11 mPa und 80° C getrocknet. Man erhält 361,25 g eines viskosen Harzes (Ausbeute: 98,0 % der Theorie).
Das Produkt besitzt einen Epoxidgehalt von 4,314 Aequ./kg, eine Viskosität bei 40° C von 2260 cP und ein mittleres Molekulargewicht (GPC-analytisch bestimmt) von $\overline{M}_n$ = 337 bzw. $\overline{M}_w$ = 358.

Beispiel 8 : Herstellung eines 2,3-Epoxypropyl-Bisphenol-F-methylethers

308,4 g (1,0 mol) eines Diallyl-dimethoxy-bisphenols F werden in Analogie zu Beispiel 7 mit 49,4 g (0,6 mol) Natriumacetat und 418,1 g (2,2 mol) 40%iger Peressigsäure in 1 000 ml Chloroform umgesetzt. Nach dem Aufarbeiten, wie in Beispiel 7 beschrieben, erhält man 294,85 g (86,6 % der Theorie) eines viskosen Harzes mit dem Epoxidgehalt von 4,840 Aeqi./kg, der Viskosität bei 40° C von 7470 cP und einem mittleren Molekulargewicht (GPC-analytisch bestimmt) von $\overline{M}_n$ = 400 bzw. $\overline{M}_w$ = 569.

Das Ausgangsprodukt Diallyl-dimethoxy-bisphenol F wird auf folgende Weise hergestellt:
4,0 mol Bisphenol F (Gehalt an zwei-, drei- oder mehrkernigen Verbindungen beträgt 76,5 bzw. 14,4 bzw. 9,1 Gew.%; Strukturisomerenanteil der zweikernigen Verbindungen: 13,0 Gew.% o,o'-Derivat, 49,1 Gew.% o,p'-Derivat und 37,9 Gew. p,p'-Derivat) werden in 5 l Toluol zusammen mit 10 mol Tetrabutylammoniumhydrogensulfat vorgelegt. Es wird auf 80° C erwärmt und 1 600 g (20 mol) 50%ige wässrige Natronlauge zugetropft. Anschliessend tropft man langsam 13,6 mol Allylchlorid zu und lässt noch eine Stunde am Rückfluss nachreagieren. Das Reaktionsgemisch wird viermal mit je 2 l 10%iger HCl-Lösung ausgeschüttelt und anschliessend zweimal mit je 2 l deionisiertem Wasser nachgewaschen. Die organische Phase wird abgetrennt und im Rotationsverdampfer eingeengt. Man erhält 1 122 g Produkt (Ausbeute: 100 % der Theorie). Das Produkt besitzt ein GPC-analytisch gemessenes Molekulargewicht von $\overline{M}_n$ = 323 bzw. $\overline{M}_w$ = 333 und nimmt bei der Hydrierung in DMA (Katalysator: 5 Gew.% Pd auf Kohle) 8,6 mmol Wasserstoff pro g auf.

1108 g (3,9 mol) des in der vorangehenden Stufe hergestellten Diallylethers von Bisphenol F werden zusammen mit 16,2 g LiCl und 4,25 g $Na_2CO_3$ in 260 ml Toluol vorgelegt. Das Gemisch wird auf 150° C erwärmt, wobei das Toluol abdestilliert. Anschliessend wird die Temperatur langsam auf 190° C gesteigert und dann 3 Stunden auf diesem Wert gehalten. Dann erhöht man nochmals um 10° C und hält die Temperatur für weitere 2 Stunden auf diesem Wert. Nach dem Abkühlen auf 80° C wird mit Wasser gewaschen und das Produkt in Toluol aufgenommen. Nach dem Abtrennen des Toluols erhält man das diallylsubstituierte Bisphenol F

350 g (1,25 mol) des vorangehend hergestellten Diallyl-Bisphenols F werden zusammen mit 42,5 g (0,1 mol) Tetrabutylammoniumhydrogensulfat in 625 ml Toluol vorgelegt. Die Mischung wird auf 80° C erwärmt und es werden 500 g (6,25 mol) 50%ige wässrige Natronlauge innert 2 Stunden zugegeben (violette Verfärbung). Dann kühlt man auf 70° C herunter und gibt innert 2 Stunden 425,75 g (3 mol) Methyliodid zu. Die Reaktionsmischung wird über Nacht bei 80° C stehen gelassen und dann einmal mit 500 ml Wasser ausgeschüttelt. Die organische Phase wird abgetrennt, mit 2%iger Salzsäure neutralisiert und mit Wasser nachgewaschen. Nach dem Abtrennen der organischen Phase wird über $Na_2SO_4$ getrocknet, filtriert und das Lösungsmittel im Rotationsverdampfer abgezogen. Man erhält 353,4 g eines Dimethylethers des

Diallyl-bisphenols F (Ausbeute: 91,7 % der Theorie). Das Produkt besitzt eine Viskosität von 510 cP bei 25 °C und ein GPC-analytisch ermitteltes Molekulargewicht von $\bar{M}_n$ = 405, bzw. $\bar{M}_w$ = 594. Im IR-Spektrum ist keine OH-Bande mehr zu erkennen. Dafür ist im $^1$H-NMR Spektrum eine $CH_3$-O- Absorption bei 3,8 ppm (gemessen gegen TMS in $CDCl_3$; Singulett) zu sehen.

<u>Anwendungsbeispiele</u>

<u>Beispiele A-D (allgemeine Arbeitsvorschrift)</u>

Man vermischt 100 Gewichtsteile des jeweiligen epoxidierten Produktes mit den in der folgenden Tabelle angegebenen Mengen eines o-Kresolnovolakhärters (8,3 OH-Aequ./kg) und 2-Ethyl-4-methylimidazol (EMI) als Härtungsbeschleuniger. Mittels eines Differentialthermoanalysators werden von diesen Mischungen die Glasübergangstemperaturen gemessen (Messbereich: 25-350 °C; Aufheizgeschwindigkeit: 5 °C/min).

Ferner ermittelt man die $T_g$-Werte der vorher ausgehärteten Mischungen ($T_g$-Screen Werte). Die Ergebnisse finden sich ebenfalls in der folgenden Tabelle.

| Beispiel | A | B | C | D |
|---|---|---|---|---|
| Epoxid gemäss Bsp. Nr. (Gew. T.) | Bsp. 3 (100) | Bsp. 4 (100) | Bsp. 5 (100) | Bsp. 6 (100) |
| Gew. T. Härter | 53,4 | 53,6 | 51,2 | 50,7 |
| Gew. T. EMI | 0,25 | 0,49 | 0,47 | 0,46 |
| $T_g$ (°C) | 99 | 108 | 121 | 131 |
| $T_g$ Screen (°C) | 96 | 106 | 119 | 138 |

## Ansprüche

1. Verbindungen der Formel I

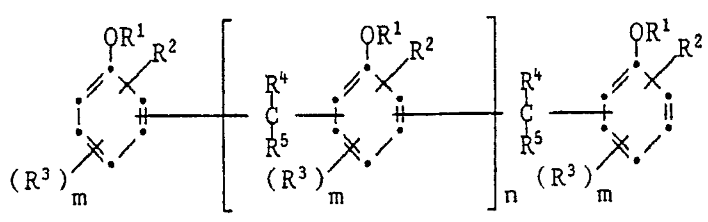

(I),

worin $R^1$ $C_1$-$C_{20}$Alkyl, $C_5$-$C_9$Cycloalkyl oder $C_7$-$C_{14}$Aralkyl ist, $R^2$ eine der Bedeutungen von $R^1$ besitzt oder zusätzlich Wasserstoff oder ein Rest der Formel II ist

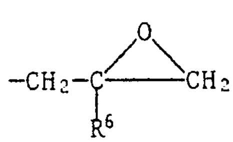

(II)

$R^3$ $C_1$-$C_6$Alkyl oder Halogen bedeutet, $R^4$ und $R^5$ unabhängig voneinander Wasserstoff oder $C_1$-$C_6$Alkyl

sind, $R^6$ Wasserstoff oder Methyl ist, m 0, 1 oder 2 ist und n eine ganze Zahl von 0 bis 30 darstellt, mit der Massgabe, dass mindestens zwei Reste $R^2$ in der Verbindung I eine Epoxidgruppe der Formel II sein müssen.

**2.** Verbindungen der Formel I gemäss Anspruch 1, worin sämtliche Reste $R^2$ eine Gruppe der Formel II bedeuten.

**3.** Verbindungen der Formel I gemäss Anspruch 2, worin die Epoxidgruppe $R^2$ ein Epoxipropylrest der Formel III ist

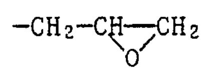
(III).

**4.** Verbindungen der Formel I gemäss Anspruch 1, worin $R^1$ $C_1$-$C_6$Alkyl ist.

**5.** Verbindungen der Formel I gemäss Anspruch 4, worin $R^1$ Methyl ist.

**6.** Verbindungen der Formel I gemäss Anspruch 1, worin n 0 ist.

**7.** Verbindungen der Formel I gemäss Anspruch 1, worin n eine ganze Zahl von 1 bis 20 ist.

**8.** Verbindungen der Formel I gemäss Anspruch 1, worin $R^4$ und $R^5$ unabhängig voneinander Wasserstoff oder Methyl bedeuten.

**9.** Verbindungen der Formel I gemäss Anspruch 1, worin $R^2$ ein Rest der Formel II ist und sich in ortho- oder in para-Position zum Rest -$OR^1$ befindet.

**10.** Verbindungen der Formel I gemäss Anspruch 1, worin n grösser als 0 ist und die Gruppen -$C(R^4R^5)$- und $R^2$ in den nicht endständigen Phenylkernen sich jeweils in beiden ortho-Positionen und in der para-Position zum Rest -$OR^1$ befinden.

**11.** Verbindungen der Formel I gemäss Anspruch 1, worin $R^1$ $C_1$-$C_6$Alkyl oder Benzyl ist, $R^2$ eine Gruppe der Formel III gemäss Anspruch 3 bedeutet und sich in ortho-Position zur Gruppe -$OR^1$ befindet, $R^3$ $C_1$-$C_4$Alkyl, Chlor oder Brom ist, m 0, 1 oder 2 bedeutet und n eine ganze Zahl von 3 bis 20 darstellt.

**12.** Verbindungen der Formel I gemäss Anspruch 1, worin m 1 oder 2 ist und $R^3$ Chlor oder Brom bedeutet.

**13.** Gemische enthaltend a) ein Polyepoxid der Formel I gemäss Anspruch 1 und b) einen Härter für Komponente (a).

**14.** Gemische gemäss Anspruch 13 enthaltend zusätzlich als Komponente c) einen Beschleuniger und/oder d) weitere Epoxidharze.

**15.** Verfahren zur Herstellung von Verbindungen der Formel I gemäss Anspruch 1 ausgehend von Verbindungen der Formel IV

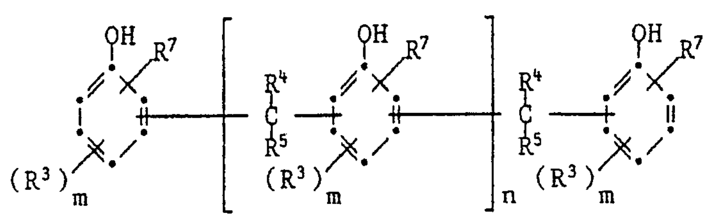
(IV),

worin die Reste $R^3$ bis $R^5$ und die Indizes m und n die in Anspruch 1 definierte Bedeutung besitzen, $R^7$ eine der in Anspruch 1 für $R^1$ definierten Bedeutungen annimmt oder zusätzlich Wasserstoff oder ein Rest der Formel V ist

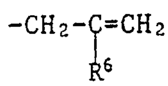

(V),

worin $R^6$ die in Anspruch 1 definierte Bedeutung besitzt, wobei mindestens zwei Gruppen $R^7$ der Verbindungen IV eine Alkenylgruppe V sein müssen, umfassend die Schritte

a) Veretherung der phenolischen Hydroxylgruppen der Verbindung IV mit einem zur Einführung des Restes $R^1$ geeigneten Reagenz und

b) Epoxidierung der Alkenylgruppen V mit einem zur Einführung der 2,3-Epoxidgruppe geeigneten Reagenz.

16. Verfahren zur Herstellung von Verbindungen der Formel I gemäss Anspruch 15, worin das Veretherungsreagenz kein Halogen als Abgangsgruppe besitzt.

17. Verfahren zur Herstellung von Verbindungen der Formel I gemäss Anspruch 15, worin das Epoxidierungsreagenz eine Percarbonsäure ist.

18. Verwendung der Verbindungen der Formel I gemäss Anspruch 1 als Umhüllungsmaterialien für elektronische Komponenten.

## Claims

1. A compound of formula I

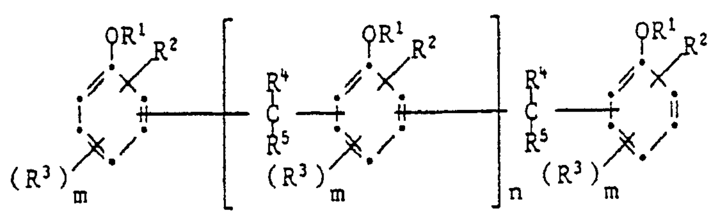

(I)

in which $R^1$ is $C_1$-$C_{20}$alkyl, $C_5$-$C_9$cycloalkyl or $C_7$-$C_{14}$aralkyl, $R^2$ has one of the meanings of $R^1$ or is, in addition, hydrogen or a radical of formula II

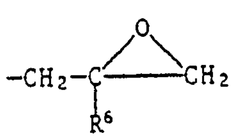

(II)

$R^3$ is $C_1$-$C_6$alkyl or halogen, $R^4$ and $R^5$ independently of one another are hydrogen or $C_1$-$C_6$alkyl, $R^6$ is hydrogen or methyl, m is 0, 1 or 2 and n is an integer from 0 to 30, with the proviso that at least two radicals $R^2$ in compound I must be an epoxide group of formula II.

2. A compound of formula I according to claim 1, in which all radicals $R^2$ are a group of formula II.

3. A compound of formula I according to claim 2, in which the epoxide group $R^2$ is an epoxypropyl radical of formula III

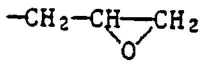

(III)

4. A compound of formula I according to claim 1, in which $R^1$ is $C_1$-$C_6$alkyl.

5. A compound of formula I according to claim 4, in which $R^1$ is methyl.

6. A compound of formula I according to claim 1, in which n is 0.

7. A compound of formula I according to claim 1, in which n is an integer from 1 to 20.

8. A compound of formula I according to claim 1, in which $R^4$ and $R^5$ independently of one another are hydrogen or methyl.

9. A compound of formula I according to claim 1, in which $R^2$ is a radical of formula II and is in the ortho- or in the para-position to the -$OR^1$ radical.

10. A compound of formula I according to claim 1, in which n is greater than 0 and the groups -$C(R^4R^5)$- and $R^2$ in the non-terminal phenyl nuclei are each in the two ortho-positions and in the para-position with respect to the -$OR^1$ radical.

11. A compound of formula I according to claim 1, in which $R^1$ is $C_1$-$C_6$-alkyl or benzyl, $R^2$ is a group of formula III according to claim 3 and is in the ortho-position to the -$OR^1$ group, $R^3$ is $C_1$-$C_4$alkyl, chlorine or bromine, m is 0, 1 or 2 and n is an integer from 3 to 20.

12. A compound of formula I according to claim 1, in which m is 1 or 2 and $R^3$ is chlorine or bromine.

13. A mixture containing a) a polyepoxide of formula I according to claim 1 and b) a hardener for component (a).

14. A mixture according to claim 13 containing additionally as component c) an accelerator and/or d) further epoxy resins.

15. A process for the preparation of a compound of formula I according to claim 1 starting from a compound of formula IV

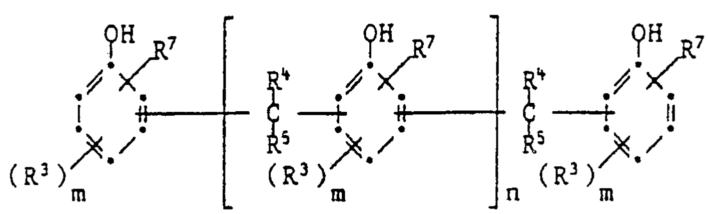

(IV)

in which the radicals $R^3$ to $R^5$ and the indices m and n are as defined in claim 1, $R^7$ has one of the meanings defined for $R^1$ in claim 1 or, in addition, is hydrogen or a radical of formula V

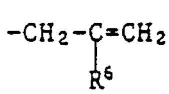

(V)

in which $R^6$ is as defined in claim 1, where at least two groups $R^7$ of compound IV must be an alkenyl group V, said process comprising the steps

a) etherification of the phenolic hydroxyl groups of compound IV with a reagent suitable for introduction of the radical $R^1$ and

b) epoxidation of the alkenyl groups V with a reagent suitable for introduction of the 2,3-epoxide group.

**16.** A process for the preparation of a compound of formula I according to claim 15, in which the etherification reagent does not contain a halogen as a leaving group.

**17.** A process for the preparation of a compound of formula I according to claim 15, in which the epoxidation reagent is a per-carboxylic acid.

**18.** Use of a compound of formula I according to claim 1 as an encasing material for electronic components.

## Revendications

**1.** Composés répondant à la formule I :

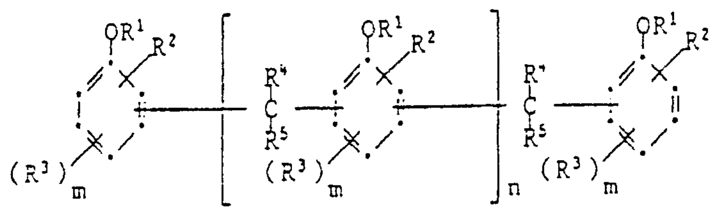

(I)

dans laquelle

$R^1$ représente un alkyle en $C_1$-$C_{20}$, un cycloalkyle en $C_5$-$C_9$ ou un aralkyle en $C_7$-$C_{14}$,
$R^2$ a l'une des significations qui ont été données pour $R^1$ et peut en outre représenter l'hydrogène ou un radical de formule II :

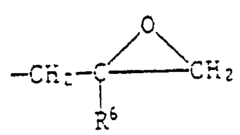

(II),

$R^3$ représente un alkyle en $C_1$-$C_6$ ou un halogène,
$R^4$ et $R^5$ représentent chacun, indépendamment l'un de l'autre, l'hydrogène ou un alkyle en $C_1$-$C_6$,
$R^6$ représente l'hydrogène ou un méthyle,
m est égal à 0, à 1 ou à 2, et
n désigne un nombre entier de 0 à 30, au moins deux des symboles $A^2$ , dans le composé (I), représentant obligatoirement un radical époxydique de formule II.

**2.** Composés de formule I selon la revendication 1, dans lesquels les symboles $R^2$ représentent tous un radical de formule II.

**3.** Composés de formule I selon la revendication 2, dans lesquels le radical époxydique $R^2$ est un radical époxypropyle de formule III :

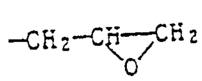

(III).

**4.** Composés de formule I selon la revendication 1 dans lesquels $R^1$ représente un alkyle en $C_1$-$C_6$.

**5.** Composés de formule I selon la revendication 4 dans lesquels $R^1$ représente un radical méthyle.

6. Composés de formue I selon la revendication 1 dans lesquels n est égal à 0.

7. Composés de formule I selon la revendication 1 dans lesquels n désigne un nombre entier de 1 à 20.

8. Composés de formule I selon la revendication 1 dans lesquels $R^4$ et $R^5$ représentent chacun, indépendamment l'un de l'autre, l'hydrogène ou un méthyle.

9. Composés de formule I selon la revendication 1 dans lesquels $R^2$ représente un radical de formule II et se trouve en position ortho ou para relativement au radical $-OR^1$.

10. Composés de formule I selon la revendication 1 dans lesquels n est supérieur à 0 et dans lesquels les radicaux $-C(R^4R^5)-$ et $R^2$ se trouvent, sur les noyaux phényles non terminaux, respectivement aux deux positions ortho et à la position para relativement au radical $-OR^1$.

11. Composés de formule I selon la revendication 1 dans lesquels $R^1$ représente un alkyle en $C_1$-$C_6$ ou un benzyle, $R^2$ représente un radical de formule III selon la revendication 3 et se trouve en position ortho par rapport au radical $-OR^1$, $R^3$ représente un alkyle en $C_1$-$C_4$, le chlore ou le brome, m est égal à 0, à 1 ou à 2 et n désigne un nombre entier de 3 à 20.

12. Composés de formule I selon la revendication 1 dans lesquels m est égal à 1 ou à 2 et $R^3$ représente le chlore ou le brome.

13. Mélanges qui contiennent a) un polyépoxyde de formule I selon la revendication 1 et b) un durcisseur pour la composante (a).

14. Mélanges selon la revendication 13 qui contiennent en outre, comme composante c), un accélérateur et/ou d) d'autres résines époxydiques.

15. Procédé pour préparer des composés de formule I selon la revendication 1, à partir de composés répondant à la formule IV :

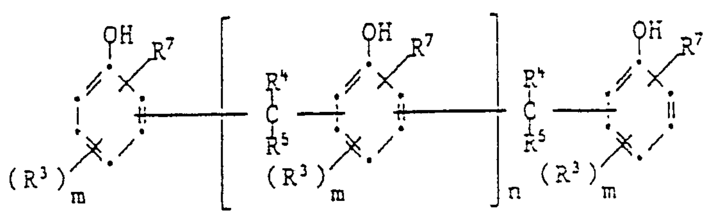

(IV)

dans laquelle les symboles $R^1$ à $R^5$ et les indices m et n ont les significations qui leur ont été données à la revendication 1, et $R^7$ a l'une des significations qui ont été données à la revendication 1 pour $R^1$ et peut en outre représenter l'hydrogène ou un radical répondant à la formule V :

$$-CH_2-\underset{\displaystyle R^6}{\underset{|}{C}}=CH_2 \qquad (V)$$

dans laquelle $R^6$ a la signification donnée à la revendication 1, au moins deux radicaux $R^7$, dans les composés (IV), représentant obligatoirement un radical alcényle (V), procédé qui comprend les étapes suivantes :

a) éthérification des radicaux hydroxy phénoliques du composé (IV) au moyen d'un réactif apte à introduire le radical $R^1$, et

b) époxydation des radicaux alcényles (V) au moyen d'un réactif apte à introduire le radical époxy-2,3.

16. Procédé pour préparer des composés de formule I selon la revendication 15, selon lequel l'agent d'éthérification ne contient pas d'halogène comme radical éliminable.

17. Procédé pour préparer des composés de formule I selon la revendication 15, selon lequel l'agent d'époxydation est un acide percarboxylique.

18. Application des composés de formule I selon la revendication 1 comme matières d'enrobage pour des composants électroniques.